# EUROPÄISCHE PATENTSCHRIFT

(11) **EP 0 667 089 B1**
(45) Veröffentlichungstag und Bekanntmachung des Hinweises auf die Patenterteilung: **10.09.1997**
(21) Anmeldenummer: 93924014.9
(22) Anmeldetag: 02.11.1993
(51) Int. Cl.: H04Q 7/20, H04M 1/72

(54) **ANORDNUNG ZUR STEUERUNG EINER SENDE-/EMPFANGSEINRICHTUNG, INSBESONDERE VON BASISSTATIONEN UND MOBILTEILEN EINES SCHNURLOS-TELEFONSYSTEMS**
ARRANGEMENT FOR CONTROLLING A TRANSMITTER-RECEIVER PAIR, IN PARTICULAR BASE STATIONS AND MOBILE UNITS OF A CORDLESS TELEPHONE SYSTEM
AGENCEMENT PERMETTANT D'ASSURER LA COMMANDE D'UNE UNITE EMETTRICE ET D'UNE UNITE RECEPTRICE, NOTAMMENT DE STATIONS DE BASE ET D'UNITES MOBILES D'UN SYSTEME DE TELEPHONE SANS FIL

(30) Priorität: 02.11.1992 DE 9214886 U
(43) Veröffentlichungstag der Anmeldung: 16.08.1995
(73) Patentinhaber: SIEMENS AKTIENGESELLSCHAFT, 80333 München (DE)
(72) Erfinder: PILLEKAMP, Klaus-Dieter Dipl.-Ing., D-40699 Erkrath (DE)
(86) Internationale Anmeldenummer: DE9301045
(87) Internationale Veröffentlichungsnummer: WO9410812

(56) Entgegenhaltungen:
- WO-A-92/13395
- FR-A- 2 670 968
- GB-A- 2 249 922

## Beschreibung

Die Erfindung betrifft eine Anordnung zur Steuerung einer Sende-/Empfangseinrichtung von Basisstationen und/oder Mobilteilen, insbesondere eines Schnurlos-Telefonsystems gemäß dem Oberbegriff des Patentanspruches 1.

Schnurlos-Telefonsysteme, beispielsweise auf das TDMA-Prinzip (Time Division Multiple Access) basierende Systeme (z. B. DECT-Schnurlossystem, CT2-Schnurlossystem etc.) und auf das CDMA-Prinzip (Code Division Multiple Access) basierende Systeme, können in der Weise ausgebildet sein, daß zu übertragende Sprache sendeseitig komprimiert, von der Sendeeinrichtung der sendenden Einheit (Basisstation, Mcbilteil) im Rahmen einer Funkverbindung übertragen, von der Empfangseinrichtung der empfangenden Einheit (Mobilteil, Basisstation) empfangen und expandiert wird (Burst-Technik).

Aus der GB-A-2 249 922 ist beispielsweise ein mobiles TDMA-Funktelekommunikationssystem bekannt, das die vorstehend genannten Eigenschaften aufweist.

Die der Erfindung zugrundeliegende Aufgabe besteht darin, Basisstationen und/oder Mobilteilen, insbesondere eines Schnurlos-Telefonsystems mit einem möglichst geringen Energieeinsatz zu betreiben.

Diese Aufgabe wird ausgehend von der in dem Oberbegriff des Patentanspruches 1 definierten Anordnung durch die kennzeichnenden Merkmale des Patentanspruches 1 gelöst.

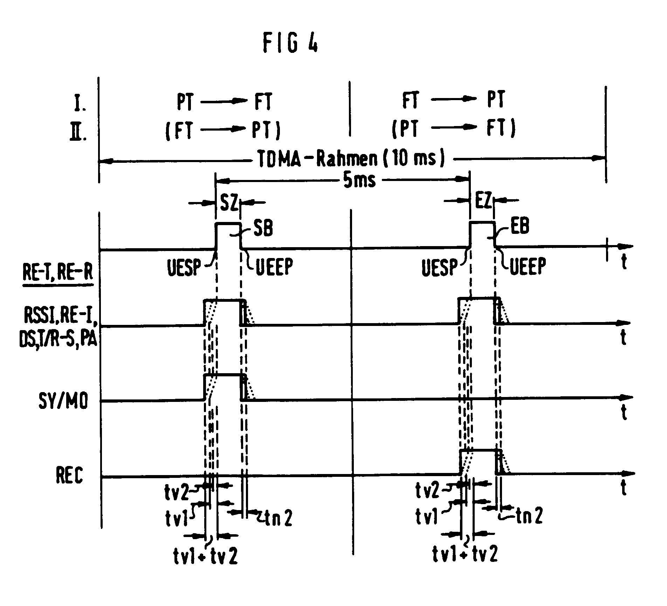

Um bei Basisstationen und/oder Mobilteilen, insbesondere eines Schnurlos-Telefonsystems den für den Betrieb der Basisstation und/oder des Mobilteils mit Ausnahme der für eine Rahmentaktüberwachung notwendigen Baugruppen erforderlichen Energieeinsatz (z.B. in einer Sende-/Empfangseinrichtung der Basisstation und/oder des Mobilteils) zu verringern - insbesondere dann, wenn die genannten Einrichtungen stationär, z. B. über eine Batterie, versorgt werden, wird die Sende-/Empfangseinrichtung mit einem gewissen zeitlichen Vorlauf in bezug auf den bei der Übertragungstechnik (z. B. TDMA- bzw. CDMA-Verfahren) in periodischen Zeitabstanden auftretenden Sende-/Empfangsburst (Figur 4) eingeschaltet. Die Vorlaufzeit kann dabei aus einer ersten Teilvorlaufzeit (Anspruch 2) und einer zweiten Teilvorlaufzeit (Anspruch 3) bestehen, wobei mit der ersten Teilvorlaufzeit die von den elektronischen Bauelementen in der Sende/Empfangseinrichtung benötigte Anlaufzeit vom Einschaltzeitpunkt bis zum Beginn des Sende-/Empfangsburst gemeint ist und wobei mit der zweiten Teilvorlaufzeit die Zeit gemeint ist, die sicherstellt, daß die Sende-/Empfangseinrichtung während des Sende-/Empfangsbursts aktiviert ist. Damit die Sende/Empfangseinrichtung auch über die gesamte Dauer des Sende-/Empfangsburst eingeschaltet ist, wird die Sende/Empfangseinrichtung mit dem Ende des Sende-/Empfangsburst abgeschaltet. Dabei ist es wie beim Einschalten der Sende/Empfangseinrichtung - analog zu der dort vorgesehenen zweiten Teilvorlaufzeit - auch möglich, eine entsprechende Teilnachlaufzeit (Anspruch 4) für das Ausschalten der Sende/Empfangseinrichtung vorzusehen, um sicherzustellen, daß die Sende-/Empfangseinrichtung auch während der gesamten Dauer des Sende-/Empfangsburst eingeschaltet ist.

Vorteilhafte Weiterbildungen der Erfindung sind in den Unteransprüchen angegeben.

Nach Anspruch 5 enthält die Sende-/Empfangseinrichtung zum einen mehrere Teileinrichtungen (zentrale Funktionen), wie z. B. Schalteinrichtungen, einen Verstärker und eine Schnittstelleneinrichtung und zum anderen einen Sender und Empfänger, die nach Anspruch 6 gleichzeitig und nach Anspruch 7 zeitlich versetzt ein- und ausgeschaltet werden.

Ein Ausführungsbeispiel der Erfindung wird anhand der Zeichnungen beschrieben. Es zeigen:
Figur 1 eine Anordnung zur Steuerung einer Sende/Empfangseinrichtung in einer Basisstation bzw. einem Mobilteil eines Schnurlos-Telefonsystems,
Figur 2 den prinzipiellen Aufbau der Sende/Empfangseinrichtung nach Figur 1,
Figur 3 einen TDMA-Zeitrahmen in einem Schnurlos-Telefonsystem nach dem DECT-Standard,
Figur 4 den zeitlichen Zusammenhang zwischen Sende- und Empfangsburst und der Aktivierung der Sende-/Empfangseinrichtung nach Figur 1 und 2.

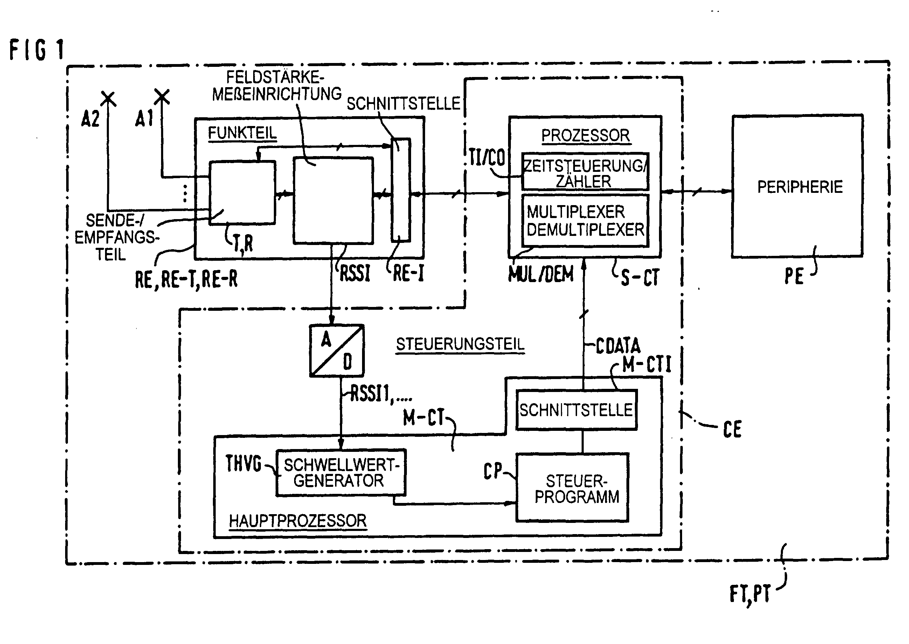

Figur 1 zeigt den prinzipiellen Schaltungsaufbau einer Basisstation FT oder eines Mobilteiles PT eines Schnurlos-Telefonsystems. Sowohl die Basisstation FT als auch das Mobilteil PT enthalten ein Funkteil (Radio Element) RE - im folgenden auch als Sende-/Empfangseinrichtung RE-T, RE-R bezeichnet -, ein Steuerungsteil (Controlling Element) CE und periphere Schaltungsteile (Peripheral Elements) PE, die in dem Funktionsblock "Peripheral Elements" zusammengefaßt sind. Bei der folgenden Beschreibung wird davon ausgegangen, daß für das Schnurlos-Telefonsystem der DECT-Standard (Digital European Cordless Telecomnunication) implementiert ist. Hierauf ist die Erfindung jedoch nicht eingeschränkt. So ist die Erfindung auch auf vergleichbare Standards, wie z. B. den CT2-oder GSM-Standard ohne weiteres anwendbar.

Während sich Basisstation FT und Mobilteil PT in bezug auf das Steuerungsteil CE und dem Funkteil RE bzw. der Sende/Empfangseinrichtung RE-T,RE-R - im Umfang der erfindungsrelevanten Betrachtung - nicht unterscheiden, sind die peripheren Schaltungsteile PE der Basisstation FT bzw. des Mobilteils PT unterschiedlich ausgebildet.

So umfassen die peripheren Schaltungsteile PE bei der Basisstation FT - ausgehend von Basisstationen bekannter Schnurlos-Telefonsysteme (Wolf, Klaus: "Auch ohne Schnur "auf Draht"", Telcom Report 10, 1987, Heft 2, Seiten 130 ff., z. B. Seite 134) - z. B. interne Teilnehmerschaltungen bzw. Amts- oder Nebenstellenanlagenschaltungen mit vorgeschalteten ADPCM-Codier-/Decodiereinrichtungen und einen internen Peripherie-Controller, während in den peripheren Schaltungsteilen PE des Mobilteils PT - ausgehend von Mobilteilen bekannter Schnurlos-Telefonsysteme (Telcom Report 10, 1987, Heft 2, Seite 135) - z. B. ein Mikrofon, eine Piezo-Hörkapsel, ein Piezo-Tonruf, ein Akkumulator, eine Tastatur, eine LED-Anzeige, sowie NF- und Tonrufverstärker enthalten.

Die vorstehend genannten peripheren Schaltungsteile PE der Basisstation FT und des Mobilteils PT können, ohne jegliche Beschränkung der Erfindung auch durch andere Schaltungsteile ersetzt werden.

Die für die Erfindung relevanten Teile des Schaltungsaufbaus der Basisstation FT und des Mobilteiles PT nach Figur 1 sind das Funkteil RE bzw. die Sende-/Empfangseinrichtung RE-T, RE-R und das Steuerungsteil CE. Dem Funkteil RE sind dabei zur Übertragung und zum Empfang von Funksignalen (z. B. TDMA-bzw. CDMA-Funksignale) zwei Antennen Al, A2 zugeordnet, die sowohl als Sende- als auch Empfangsantenne fungieren. Alternativ ist es ohne jegliche Einschränkung der Erfindung aber auch möglich, eine Antenne oder mehr als zwei Antennen dem Funkteil RE zuzuordnen.

Das Funkteil RE weist weiterhin - wie in Figur 1 durch drei Funktionsblöcke dargestellt - ein Sende-/Empfangsteil (Transceiver) T, R, eine Feldstärke-Meßeinrichtung (Radio Signal Strength Indicator) RSSI und eine Schnittstelleneinrichtung (Interface) RE-I auf, die in dem Funkteil RE in der dargestellten Weise miteinander verbunden sind. Die Feldstärke-Meßeinrichtung RSSI mißt die Feldstärke der über die Antennen A1, A2 und in dem Sende-/Empfangsteil T, R selektierten Funksignale.

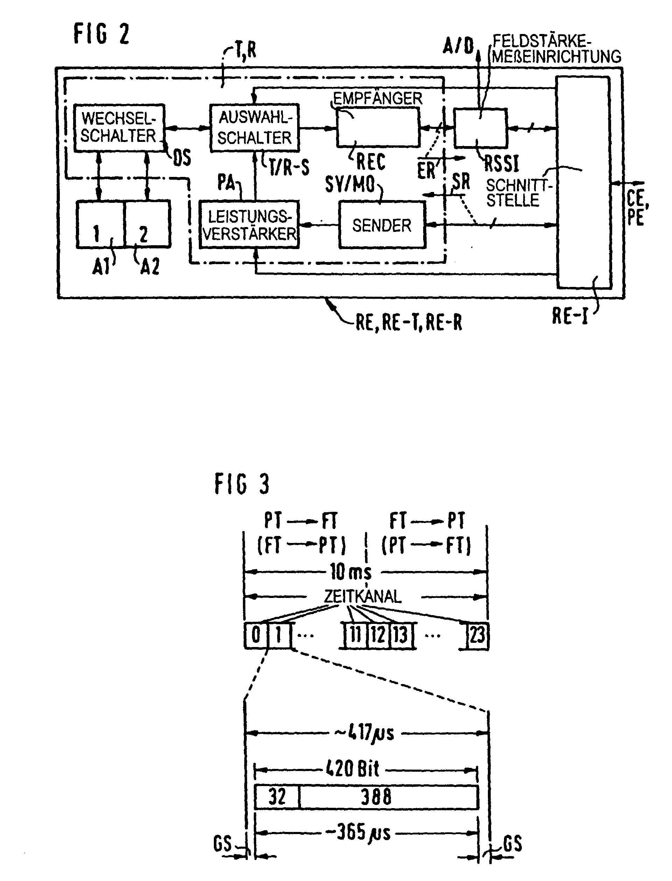

Wie das Sende-/Empfangsteil T, R im einzelnen aufgebaut und mit der Feldstärke-Meßeinrichtung RSSI und der Schnittstelleneinrichtung RE-I verbunden ist, wird anhand der Figur 2 gezeigt und beschrieben.

Die Feldstärke-Meßeinrichtung RSSI dient allgemein der Prüfung, ob ein Kanal belegt ist (vgl. DECT-Draft prETS 300 175-3: 1991, page 164). Die Vorschrift, wie die Feldstärke zu messen ist, wird im DECT-Standard angegeben (vgl. DECT-Draft prETS 300 175-2: 1991, page 31, 6.2 und page 38, 8.3). Die Kanalbelegung wird dabei durch das Messen der Feldstärke (Mindestfeldstärke) empfangener Funksignale festgestellt, wobei die Meßergebnisse RSSI1, ... anschließend über einen Analog-/Digitalwandler A/D einem in einem Hauptprozessor M-CT des Steuerungsteils CE integrierten Schwellwertgenerator (THreshold Value Generator) THVG zugeführt werden. Der Schwellwertgenerator THVG bildet dabei im laufenden Betrieb der Basisstation FT bzw. des Mobilteils PT fortwährend aktualisierte Werte, die von dem Hauptprozessor M-CT in ein Steuerprogramm (Controlling Program) CP eingebunden werden und zur Ansteuerung der Antennen A1, A2 dienen. Mit den von dem Schwellwertgenerator THVG erhaltenen Informationen über die Kanalbelegung (Eingangsgröße) werden von dem Steuerprogramm CP Steuerdaten (Controlling DATA) CDATA gebildet, die über eine Hauptprozessorschnittstelle M-CTI einem Subprozessor (Sub-Controller) S-CT zugeführt werden.

Der Subprozessor S-CT wird in der Basisstation FT als Time Switch Controller und in dem Mobilteil PT als Burst Mode Controller bezeichnet. Dem Subprozessor S-CT ist unter anderem eine Multiplex-/Demultiplexeinheit MUL/DEM zugeordnet, die 1,152 Mbit/s-Daten im DECT-Burstformat erzeugt bzw. empfängt. Darüber hinaus übernimmt der Subprozessor S-CT Steuerungsaufgaben für das Funkteil RE und die peripheren Schaltungsteile PE. Bei der Basisstation FT ordnet die Multiplex/Demultiplexeinheit MUL/DEM des Subprozessors S-CT den empfangenen bzw. zu sendenden Datenpaketen beispielsweise bis zu sechs interne bzw. drei externe Telefonverbindungen im Zeitlagegetrenntverfahren TDMA (Time Division Multiple Access) bzw. im Codelagegetrenntverfahren CDMA (Code Division Multiple Access) zu. Darüber hinaus enthält der Subprozessor S-CT eine Zeitsteuerungs-/zähleinrichtung (Timer/Counter) TI/CO, der dem Subprozessor S-CT insbesondere in bezug auf das zeitliche Auftreten von Bits, Zeitschlitzen und TDMA-bzw. CDMA-Rahmen taktet.

Figur 2 zeigt den detaillierteren Aufbau des Funkteils RE bezüglich des Sende-/Empfangsteils T, R. Das Sende/Empfangsteil T, R enthält von den Übertragungsrichtungen, einer Senderichtung SR und Empfangsrichtung ER, unabhängige und abhängige Funktionsblöcke.

Zu den unabhängigen Funktionsblöcken gehören zwei in der genannten Reihenfolge den Antennen A1, A2 vorgeschaltete Schaltelemente, ein Wechselschalter (Diversity Switch) DS und ein zwischen der Senderichtung SR und Empfangsrichtung ER hin- und herschaltender Auswahlschalter (T/R-Switch) T/R-S.

Die von der jeweiligen Übertragungsrichtung abhängigen Funktionsblöcke des Sende-/Empfangsteils T, R werden in Senderichtung SR in der genannten Reihenfolge durch zwei zwischen der Schnittstelleneinrichtung RE-I des Funkteils RE und dem Auswahlschalter T/R-S geschaltete Baugruppen, einem Synthesizer/Modulator (Synthesizer/Modulator) SY/MO - im folgenden auch als Sender bezeichnet - und einem Leistungsverstärker (Power Amplifier) PA sowie in Empfangsrichtung ER durch einen zwischen der Feldstärke-Meßeinrichtung RSSI und dem Auswahlschalter T/R-S geschalteten Empfänger (Receiver) REC gebildet.

Mit Ausnahme des Wechselschalters DS sind alle anderen Baugruppen bzw. Funktionsblöcke des Sende-/Empfangsteils T, R auch dann in diesem enthalten, wenn dem Funkteil RE beispielsweise nur eine Antenne zugeordnet ist.

Die Funktionsweise der schnurlosen Telekommunikation in einem Schnurlos-Telekommunikationssystem mit der Basisstation FT und dem Mobilteil PT nach Figur 1 und 2 ist durch die bereits genannten Druckschriften (Telcom Report 10, 1987, Heft 2, Seiten 130 ff. und DECT-Draft prETS 175-3: 1991, ganzes Dokument) prinzipiell angedeutet. So wird in dem Schnurlos-Telekommunikationssystem bei einer bidirektionalen (Sender/Empfänger bzw. Empfänger-/Sender) Funkverbindung zwischen der Basisstation FT und dem Mobilteil PT Sprache zum einen sendeseitig komprimiert sowie übertragen und zum anderen empfangen sowie empfangsseitig expandiert. Um den dafür erforderlichen Energieaufwand in der Basisstation FT und den Mobilteil PT zu verringern, insbesondere dann, wenn die Basisstation FT und das Mobilteil PT stationär energieversorgt werden (z. B. durch eine Batterie oder einen Akkumulator), werden die Sendeeinrichtung RE-T der Basisstation FT und des Mobilteils PT im wesentlichen nur in Sendezeiten und die Empfangseinrichtung RE-R der Basisstation FT und des Mobilteils PT im wesentlichen nur in Empfangszeiten (Figur 4) aktiviert.

Figur 3 zeigt einen DECT-spezifischen TDMA-Zeitrahmen für Schnurlos-Telefonsysteme nach dem DECT-Standard, wie er in den DE-Gebrauchsmustern G 92 14 885 (dortige Figur 3) und G 92 14 899 (dortige Figur 2) dargestellt ist. Für die schnurlose Kommunikation nach dem DECT-Standard wird eine dynamische Kanalauswahl von ca. 120 verfügbaren Kanälen durchgeführt. Die 120 Kanäle ergeben sich daraus, daß bei dem DECT-Standard zehn Frequenzbänder zwischen 1,8 und 1,9 GHz verwendet werden, wobei in jedem Frequenzband gemäß der Darstellung in Figur 3 im Zeitmultiplex (TDMA = Time Division Multiple Access) mit einem Zeitmultiplexrahmen von 10 ms gearbeitet wird. In diesem Zeitmultiplexrahmen werden 24 (von 0 bis 23) Zeitkanäle definiert und dadurch ein Rahmenschema vorgegeben. Dieses Rahmenschema wird dann derart benutzt, daß für jedes Frequenzband z. B. 12 Mobilteile PT mit einer Basisstation FT eines DECT-Kommunikationssystems gleichzeitig im Duplexbetrieb (PT-FT und FT-PT bzw. FT-PT und PT-FT) arbeiten können. Den 24 Zeitkanälen wird dabei ein Zeitschlitz (Time Slot) von jeweils 417 µs zugeordnet. Dieser Zeitschlitz gibt dabei die Zeit an, in der Informationen (Daten) übertragen werden. Dieses Übertragen der Informationen im Duplexbetrieb wird auch als Ping-Pong-Verfahren bezeichnet, weil zu einem bestimmten Zeitpunkt gesendet und zu einem anderen Zeitpunkt empfangen wird. Bei diesem Ping-Pong-Verfahren wird in jedem Zeitschlitz ein Zeitrahmen oder Impuls (Burst) von 365 µs, was in etwa einer Rahmenlänge von 420 Bits entspricht, mit einem Datendurchsatz von 42 kbit/s übertragen. Bezogen auf den Zeitmultiplexrahmen ergibt sich unter Berücksichtigung, daß in einem Sicherheitszeitrahmen (Guard Space = GS) an beiden Enden des Zeitrahmens jeweils 30 Bit zur Vermeidung von Überlappungen durch angrenzende Zeitschlitze zur Verfügung stehen, ein Gesamt-Datendurchsatz von 1,152 Mbit/s.

Ausgehend von den vorstehenden Ausführungen zur Figur 3 ist in Figur 4 ein TDMA-Zeitrahmen (10 ms) dargestellt, in dem ein Sendeburst SB mit einer Sendezeit SZ und 5 ms später ein Empfangsburst EB mit einer Empfangs zeit EZ auftreten (Duplexbetrieb). So kann z. B. das Mobilteil PT während der Sendezeit SZ des Sendebursts SB Informationen an die Basisstation FT übertragen und während der Empfangszeit EZ des Empfangsburst EB Informationen von der Basisstation FT empfangen (Fall I).

Alternativ dazu ist es auch möglich, daß die Basisstation FT während der Sendezeit SZ des Sendeburst SB Informationen an das Mobilteil PT überträgt und während der Empfangszeit EZ des Empfangsburst EB Informationen von dem Mobilteil PT empfängt (Fall II).

Da die zeitliche Aufeinanderfolge des Sendeburst SB und Empfangsburst EB in einem TDMA-Rahmen nach dem DECT-Standard fest vorgegeben ist (5 ms) und dieser zeitliche Zusammenhang zwischen dem Sendeburst SB und Empfangsburst EB für den Schnurlos-Betrieb der Basisstation FT und des Mobilteils PT die zeitliche Bezugsgröße darstellt, werden die Basisstation FT und das Mobilteil PT durch die zeitsteuerungs/Zähleinrichtung TI/CO nach Figur 1 entsprechend getaktet und somit auf den DECT-spezifischen Zeitrahmen eingestellt.

Wenn nun z. B. der Benutzer an dem Mobilteil PT in dem TDMA-Rahmen Informationen (z. B. Sprachnachrichten) an die Basisstation FT übertragen will, dann muß das Mobilteil PT zum Übertragungsstartpunkt (Anfang des Sendeburst SB mit der Sendezeit SZ) UESP sendebereit sein. "Sendebereit" bedeutet dabei, daß das Funkteil RE, das Steuerungsteil CE und die peripheren Schaltungsteile PE des Mobilteils PT nach Figur 1 eingeschaltet sind. Dies kann beispielsweise dadurch erreicht werden, daß die genannten Schaltungsteile für die gesamte Dauer, in der das Mobilteil PT vom Benutzer in Betrieb genommen wird, eingeschaltet sind. Dies hat jedoch zur Folge, daß auf der anderen Seite die Energieversorgungsquellen des Mobilteiles PT (z. B. Batterie oder Akkumulator) stärker (im Sinne des Energieverbrauchs) belastet werden und somit die effektive Betriebsdauer des Mobilteils PT bis zum Batteriewechsel bzw. zum Aufladen des Akkumulators verringert wird.

Um diesen beiden Anforderungen an das Mobilteil PT zumindest teilweise gerecht zu werden, ist die Sende/Empfangseinrichtung RE/T, RE/R im wesentlichen nur während der Sendezeit SZ des Sendeburst SB aktiviert. Für diese Aktivierung wird die Sende-/Empfangseinrichtung RE-T, RE-R mit einer ersten Vorlaufzeit tv1 zum Übertragungsstartpunkt UESP eingeschaltet. Mit dieser ersten Vorlaufzeit tvl wird dem Umstand Rechnung getragen, daß die Sende-/Empfangseinrichtung RE-T, RE-R eine gewisse Anlaufzeit benötigt, um vollständig funktionsfähig zu sein (Anlaufphase). Die erste Vorlaufzeit tvl ist dabei so bemessen, daß die Anlaufphase der Sende/Empfangseinrichtung RE-T, RE-R zum Übertragungsstartpunkt UESP beendet ist.

Um aber für den Fall, daß die Anlaufphase der Sende/Empfangseinrichtung RE-T, RE-R zum Übertragungsstartpunkt UESP nicht beendet sein sollte (z. B. aufgrund von Alterung der elektronischen Bauelemente in dem Mobilteil PT etc.), kann es zweckmäßig sein, eine zweite Vorlaufzeit tv2 vorzusehen. Mit dieser zweiten Vorlaufzeit tv2 wird sichergestellt, daß die Sende-/Empfangseinrichtung RE-T, RE-R zum Übertragungsstartpunkt UESP auf jeden Fall betriebsbereit ist (Anlaufphase auf jeden Fall beendet). Der Einschaltzeitpunkt der für die Informationsübertragung benötigten Sende/Empfangseinrichtung RE-T, RE-R des Mobilteils PT kann somit durch die erste Vorlaufzeit tv1, die zweite Vorlaufzeit tv2 oder durch die Gesamtvorlaufzeit tv1 + tv2 bestimmt sein.

Bei der Darstellung in Figur 4 wird davon ausgegangen, daß die Sende-/Empfangseinrichtung RE-T, RE-R, die wie vorstehend beschrieben, einerseits aus der Feldstärke-Meßeinrichtung RSSI, der Schnittstelleneinrichtung RE-I, dem Wechselschalter DS, dem Auswahlschaltung T/R-S und dem Leistungsverstärker PA - im folgenden als zentrale Funktionselemente der Sende/Empfangseinrichtung RE-T, RE-R bezeichnet - sowie andererseits aus dem Sender SY/MO und Empfänger REC besteht, zu den möglichen Einschaltzeitpunkten immer gleichzeitig eingeschaltet wird.

Alternativ ist es aber auch möglich, daß die zentralen Funktionselemente der Sende-/Empfangseinrichtungen RE-T, RE-R zeitversetzt zu dem Sender SY/MO und dem Empfänger REC eingeschaltet werden.

Darüber hinaus ist es auch vorstellbar, die sendezeitbezogene Einschaltung des Mobilteils PT auf alle Funktionsbaugruppen des Mobilteils PT zu erweitern, die nicht für die Überwachung des TDMA-Rahmentaktes erforderlich sind.

Analog zu der zweiten Vorlaufzeit tv2 ist es ferner möglich, eine Nachlaufzeit tn2 zu definieren, mit der die Sende/Empfangseinrichtung RE-T, RE-R in bezug auf einen Übertragungsendpunkt (Ende der Sendezeit SZ des Sendeburst SB) UEEP abgeschaltet wird. Dadurch wird erreicht, daß die Sende/Empfangseinrichtung RE-T, RE-R bei einer gegebenenfalls auftretenden Zeit-/Frequenzdrift der Zeitsteuerungs/Zähleinrichtung TI/CO nicht zu früh abgeschaltet wird.

Die vorstehenden auf den Sendeburst SB mit der Sendezeit SZ bezogenen Ausführungen sind in gleicher Weise auch auf den Empfangsburst EB mit der Empfangszeit EZ, in dem das Mobilteil PT Informationen (z. B. Sprachnachrichten) von der Basisstation FT erhält, übertragbar. Darüber hinaus sind die genannten Ausführungen zum Sende-/Empfangsbetrieb des Mobilteils PT innerhalb eines TDMA-Rahmens (Fall I) in gleicher Weise auf den Sende-/Empfangsbetrieb der Basisstation FT innerhalb eines TDMA-Rahmens nach Figur 3 übertragbar (Fall II).

## Patentansprüche

1. Anordnung zur Steuerung einer Sende-/Empfangseinrichtung von Basisstationen (FT) und/oder Mobilteilen (PT), insbesondere eines Schnurlos-Telefonsystems, wobei die Basisstationen (FT) und die Mobilteile (PT) jeweils einen Prozessor (M-CT) aufweisen, dem ein Steuerungsprogramm (CP) zugeordnet ist und wobei zu übertragende Sprache sendeseitig komprimiert, von der Sendeeinrichtung (RE-T) einer sendenden Einheit (FT, PT) im Rahmen einer Funkverbindung übertragen und von der Empfangseinrichtung (RE-R) einer empfangenden Einheit (PT, FT) empfangen und expandiert wird, **dadurch gekennzeichnet**, daß das Steuerungsprogramm (CP) in der Weise ausgestaltet ist, daß die Sendeeinrichtung (RE-T) der sendenden Einheit (FT, PT) im wesentlichen nur während fester, vorherbestimmter Sendezeiten (SZ) innerhalb eines Übertragungszeitrahmens (TDMA-Rahmen) und die Empfangseinrichtung (RE-R) der empfangenden Einheit (PT, FT) im wesentlichen nur während fester, vorherbestimmter Empfangszeiten (EZ) innerhalb eines Übertragungszeitrahmens (TDMA-Rahmen) aktiviert ist, wobei die für die Überwachung des Rahmentaktes erforderlichen Baugruppen von der zeitbezogenen Aktivierung ausgenommen sind.

2. Anordnung nach Anspruch 1, **dadurch gekennzeichnet**, daß die Sende-/Empfangseinrichtung (RE-T, RE-R) mit einer ersten Vorlaufzeit (tvl) zur Sende-/Empfangszeit (SZ, EZ) eingeschaltet wird.

3. Anordnung nach Anspruch 1 oder Anspruch 2, **dadurch gekennzeichnet**, daß die Sende-/Empfangseinrichtung (RE-T, RE-R) mit einer zweiten Vorlaufzeit (tv2) zur Sende-/Empfangszeit (SZ, EZ) eingeschaltet wird.

4. Anordnung nach einem der Ansprüche 1 bis 3, **dadurch gekennzeichnet**, daß die Sende-/Empfangseinrichtung (RE-T, RE-R) mit einer Nachlaufzeit (tn2) zur Sende-/Empfangszeit (SZ, EZ) ausgeschaltet wird.

5. Anordnung nach einem der Ansprüche 1 bis 4, **dadurch gekennzeichnet**, daß die Sende-/Empfangseinrichtung (RE-T, RE-R) Teileinrichtungen (RSSI, RE-I, DS, T/R-S, PA) sowie einen Sender (SY/MO) und Empfänger (REC) aufweist.

6. Anordnung nach Anspruch 5, **dadurch gekennzeichnet**, daß die Teileinrichtungen (RSSI, RE-I, DS, T/R-S, PA) sowie der Sender (SY/MO) und Empfänger (REC) gleichzeitig ein- und ausgeschaltet werden.

7. Anordnung nach Anspruch 5, **dadurch gekennzeichnet**, daß die Teileinrichtungen (RSSI, RE-I, DS, T/R-S, PA) sowie der Sender (SY/MO) und Empfänger (REC) zeitlich versetzt ein- und ausgeschaltet werden.

8. Anordnung nach einem der Ansprüche 1 bis 7, **dadurch gekennzeichnet**, daß die Sende-/Empfangszeit (SZ, EZ) der zeitlichen Dauer des Sende-/Empfangsburst (SB, EB) in einem Zeitrahmen (TDMA) entspricht.

## Claims

1. Arrangement for controlling a transmitting/ receiving device of base stations (FT) and/or mobile units (PT), in particular of a cordless telephone system, the base stations (FT) and the mobile units (PT) in each case having a processor (M-CT), to which a controlling program (CP) is assigned and voice to be transmitted being compressed on the transmission side, transmitted by the transmitting device (RE-T) of a transmitting unit (FT, PT) within a radio link and received by the receiving device (RE-R) of a receiving unit (PT, FT) and expanded, characterized in that the controlling program (CP) is designed in such a way that the transmitting device (RE-T) of the transmitting unit (FT, PT) is activated essentially only during fixed, predetermined transmission times (SZ) within a transmission time frame (TDMA frame) and the receiving device (RE-R) of the receiving unit (PT, FT) is activated essentially only during fixed, predetermined reception times (EZ) within a transmission time frame (TDMA frame), the modules required for the monitoring of the frame clock being excepted from the time-related activation.

2. Arrangement according to Claim 1, characterized in that the transmitting/receiving device (RE-T, RE-R) is switched on with a first lead time (tv1) with respect to the transmission/reception time (SZ, EZ).

3. Arrangement according to Claim 1 or Claim 2, characterized in that the transmitting/receiving device (RE-T, RE-R) is switched on with a second lead time (tv2) with respect to the transmission/reception time (SZ, EZ).

4. Arrangement according to one of Claims 1 to 3, characterized in that the transmitting/receiving device (RE-T, RE-R) is switched off with a lag time (tn2) with respect to the transmission/reception time (SZ, EZ).

5. Arrangement according to one of Claims 1 to 4, characterized in that the transmitting/receiving device (RE-T, RE-R) has subdevices (RSSI, RE-I, DS, T/R-S, PA) and also a transmitter (SY/MO) and receiver (REC).

6. Arrangement according to Claim 5, characterized in that the subdevices (RSSI, RE-I, DS, T/R-S, PA) and also the transmitter (SY/MO) and receiver (REC) are switched on and off simultaneously.

7. Arrangement according to Claim 5, characterized in that the subdevices (RSSI, RE-I, DS, T/R-S, PA) and also the transmitter (SY/MO) and receiver (REC) are switched on and off at different times.

8. Arrangement according to one of Claims 1 to 7, characterized in that the transmission/reception time (SZ, EZ) corresponds to the time duration of the transmission/reception burst (SB, EB) in a time frame (TDMA).

## Revendications

1. Dispositif de commande d'un dispositif émetteur/ récepteur de stations de base (FT) et/ou d'unités mobiles (PT), notamment d'un système de téléphone sans fil, selon lequel les stations de base (FT) et les unités mobiles (PT) comportent chacune un processeur (M-CT) auquel est associé un programme de commande (CP) et selon lequel la parole à transmettre est comprimée du côté émetteur, est transmise par le dispositif émetteur (RE-T) d'une unité émettrice (FT, PT) dans le cadre d'une communication radio et est reçue et décomprimée par le dispositif récepteur (RE-R) d'une unité réceptrice (PT, ET), **caractérisé par le fait que** le programme de commande (CP) est conçu de telle sorte que le dispositif émetteur (RE-T) de l'unité émettrice (FT, PT) est activé globalement seulement pendant des temps d'émission (SZ) fixes prédéterminés à l'intérieur d'une trame temporelle de transmission (trame TDMA) et le dispositif récepteur (RE-R) de l'unité émettrice (PT, FT) est activé globalement seulement pendant des temps de réception (EZ) fixes prédéterminés à l'intérieur d'une trame temporelle de transmission (trame TDMA), les modules nécessaires au contrôle de la cadence de trame étant exclus de cette activation en fonction du temps.

2. Dispositif selon la revendication 1, c**aractérisé par le fait que** le dispositif émetteur/récepteur (RE-T, RE-R) est mis sous tension avec un premier temps d'avance (tv1) par rapport au temps d'émission/réception (SZ, EZ).

3. Dispositif selon la revendication 1 ou la revendication 2, **caractérisé par le fait que** le dispositif émetteur/récepteur (RE-T, RE-R) est mis sous tension avec un second temps d'avance (tv2) par rapport au temps d'émission/réception (SZ, EZ).

4. Dispositif selon l'une des revendications 1 à 3, **caractérisé par le fait que** le dispositif émetteur/récepteur (RE-T, RE-R) est mis hors tension avec un temps de retard (tn2) par rapport au temps d'émission ou de réception (SZ, EZ).

5. Dispositif selon l'une des revendications 1 à 4, **caractérisé par le fait que** le dispositif émetteur/récepteur (RE-T, RE-R) comporte des dispositifs partiels (RSSI, RE-I, DS, T/R-S, PA) ainsi qu'un émetteur (SY/MO) et un récepteur (REC).

6. Dispositif selon la revendication 5, **caractérisé par le fait que** les dispositifs partiels (RSSI, RE-I, DS, T/R-S, PA) ainsi que l'émetteur (SY/MO) et le récepteur (REC) sont mis sous tension ou hors tension en même temps.

7. Dispositif selon la revendication 5, **caractérisé par le fait que** les dispositifs partiels (RSSI, RE-I, DS, T/R-S, PA) ainsi que l'émetteur (SY/MO) et le récepteur (REC) sont mis sous tension ou hors tension de manière décalée dans le temps.

8. Dispositif selon l'une des revendications 1 à 7, **caractérisé par le fait que** le temps d'émission/réception (SZ, EZ) correspond à la durée de la salve émise ou reçue (SB, EB) dans une trame temporelle (TDMA).
